# EUROPEAN PATENT APPLICATION

(11) **EP 3 009 910 A1**
(43) Date of publication of application: **20.04.2016**
(21) Application number: 14290308.7
(22) Date of filing: 14.10.2014
(51) Int. Cl.: G05F 1/46, H02J 1/00, H02M 3/06

(54) **Power supply system with multiple voltage rails of different voltage, voltage monitoring and rail selector switches for the loads**

(71) Applicant: ALCATEL LUCENT, 92100 Boulogne-Billancourt (FR)
(72) Inventor: Van Den Berg, Eric, 2018 Antwerpen (BE); Briers, Hans, 2018 Antwerpen (BE)
(74) Representative: Plas, Axel Ivo Michel

(57) **Abstract**

A voltage converting system (1) comprising:
- a power source (200) delivering a main voltage (20);
- one or more voltage rails (300) supplying supply voltages (10) obtained from said main voltage (20);
- a load (100) coupled to said voltage rails (300) and adapted to receive a desired voltage;
- a measuring unit (400) measuring a supply voltage (10);
- a control element (500) modifying the topology of the coupling of said load (100) to said voltage rails (300) when said supply voltage measured (10) is not substantially equal to said desired voltage.

## Description

### Technical Field

The present invention relates to the field of power convertors for powering an electronic circuit or an electronic or electric apparatus.

### Background

Modern electronic designs are implemented on circuit boards in which circuits require voltages as low as for example 3.3V or below, typically in the range of for example 0.75V to 3.3V. The routing of such low voltages and high currents around a printed circuit board leads to relatively large voltage drops, higher power consumption, and large PCB tracks or increased number of layers, and could result in poor output regulation. To minimize the losses in power distribution from the main power source, the distribution voltage is typically 10 to 100 times the required voltage. However, converting a voltage, e.g. an AC-mains voltage in household and business applications or 48/60V DC in telecom applications, to a lower voltage requires a low duty cycle, which results in low efficiency. The need for several voltage levels across a PCB board intrinsically requires multi-output converters. Typical topologies of DC-to-DC and AC-to-DC convertors are switching converters and use inductors. Inductors are bulky in size, and their integration on silicon remains difficult, while the switching nature of such typical converter topologies creates electromagnetic interferences, also referred to as EMI, which need to be suppressed to meet electromagnetic regulations, also referred to as EMC. The electromagnetic radiations induce losses in the circuit board and the dissipation of the generated heat threatens the integrity of the components, or requires the implementation of bulky cooling elements on the circuit board, which increases the complexity of the design. Some topologies use switched capacitors for generating supply voltages, but the power is usually limited as the capacitors need to bring over the entire amount of energy required by a component before switching. The components can for example be a part of a circuit board, e.g. processor, memory, line drivers, any other suitable application-specific integrated circuit, also referred to as ASIC, etc. The power converters can also supply voltages to sub-blocks inside for example an ASIC, or a field-programmable gate array, also referred to as FPGA, or a digital signal processor, also referred to as DSP.

The scientific publication by Jess Brown from Vishay Siliconix, entitled "Points of Load Converters - The Topologies, Converters, and Switching Devices Required for Efficient Conversion", and presented at the Power Electronics, Intelligent Motion, Renewable Energy and Energy Management Conference, also referred to as PCIM Conference, in Nuremberg, Germany, on May 14^{th}-16^{th} 2002, illustrates two typical architectures for supplying all voltage levels needed in an electronic circuit or in an apparatus.

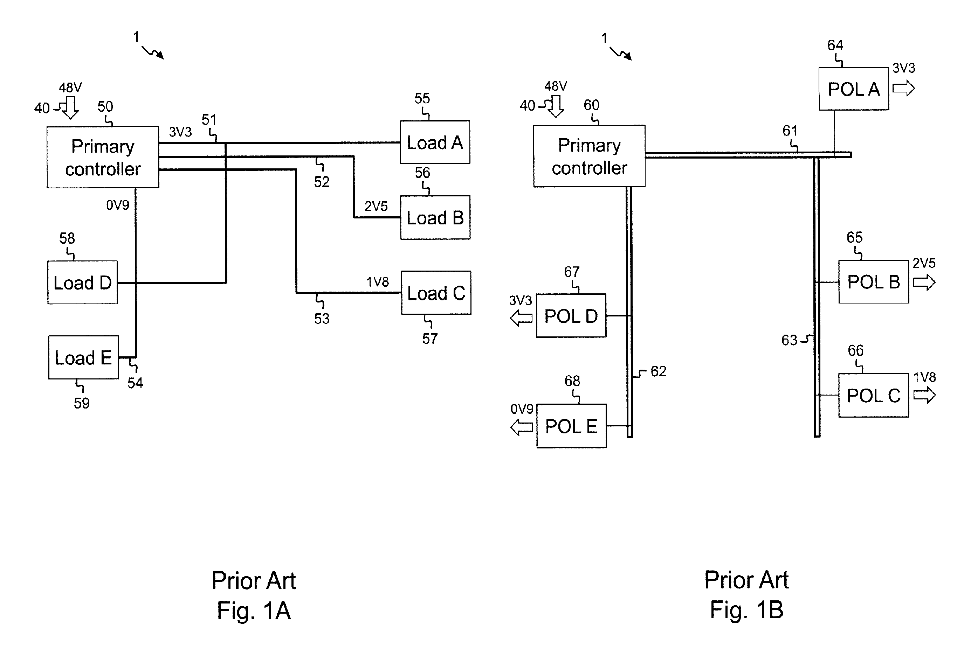

Fig. 1A depicts a simple architecture 1 for supplying all the required voltages from a main voltage delivered by a single primary controller 50.The primary controller 50 typically has an input voltage 40 of for example 48V for telecom applications. The main voltage is then stepped down to a plurality of levels of supply voltages. Each level of supply voltage is then routed along a voltage rail 51;52;53;54. The supply voltages are finally delivered to several outputs called loads 55;56;57;58;59 which can be physically distant by hundreds of millimetres. This way, as visible on Fig. 1A, the loads 55 and 59 receive a voltage of 3.3V, while the load 56 receives a voltage of 2.5V, the load 57 receives a voltage of 1.8V and the load 58 receives a voltage of 0.9V. This architecture 1 leads to relatively large voltage drops, higher power consumption, low efficiency and large PCB tracks, and could result in poor output regulation.

An alternative to the use of a primary controller with multiple outputs is the deployment of Points-Of-Loads, also referred to as POL, which generate the supply voltages out of an intermediate or so-called bus voltage. Fig. 1B shows the schematic of the architecture 1 for a distributed bus with a two-steps conversion process. A single bus voltage or, as visible in Fig. 1B, a plurality of bus voltages 61;62;63 are generated from a larger, more powerful converter 60 that receives an input voltage 40 of for example 48V for telecom applications. The bus voltages 61;62;63 are generated to deliver for example 6V to 12V. A second conversion step is performed by Point-Of-Load converters 64;65;66;67;68 which take the distributed bus voltage and convert it, i.e. step it down, to the required supply voltage at the point at which the circuit consumes the highest power. For example in Fig. 1B, the POLs 64;67 deliver a voltage of 3.3V, while the POL 65 delivers a voltage of 2.5V, the POL 66 delivers a voltage of 1.8V and the POL 68 delivers a voltage of 0.9V. This second conversion step creates additional power losses on the circuit board, which eventually result in the generation of heat. Additionally, the implementation of the Points-Of-Loads consumes additional physical space in the design of the circuit board. The switching nature of the POL also creates EMI which somehow must be suppressed to meet electromagnetic regulations. Most converter modules occupy from 15 to 30% of the total available board area and occupy an even higher percentage in volume and weight. Moreover, such an architecture 1 supplies voltages to loads even when the loads are not being used. Providing a voltage everywhere on the circuit board and at all times increases the power losses, and the electrical, magnetic and thermal costs. The lack of flexibility in the distribution of the supply voltages over time and space results in a relatively large power waste for the design. Additionally, with the architecture illustrated on Fig. 1B, the duty cycle at which the current which is drawn from the main power source may be as low as 5%, requiring large inductors and large output capacitance to keep output voltage ripple down to the required level. This low duty cycle requires significantly more filtering in order to meet the electromagnetic regulations for the circuit board.

### Summary of the Invention

It is an objective to disclose an architecture, a system and the related method that overcome the above identified shortcomings of existing solutions. More particularly, it is an objective to disclose such a system and method for supplying a plurality of supply voltages to a plurality of loads, with reduced footprint, with reduced switching noise, with increased efficiency and with reduced electrical and magnetic power losses, i.e. with reduced heat generation and reduced risk for excessive costs. It is a further objective to disclose such a system that supplies a plurality of supply voltages to a plurality of loads in a flexible and efficient manner.

According to embodiments of the present invention, the above defined objectives are realized by a voltage converting system for supplying a plurality of supply voltages, the voltage converting system comprising:
- a power source, adapted to deliver a main voltage and comprising two terminals;
- a first voltage rail connected to a first terminal of the power source;
- a second voltage rail connected to a second terminal of the power source;
- one or more voltage rails, positioned between the first voltage rail and the second voltage rail, and adapted to split the main voltage to the plurality of supply voltages and to supply the plurality of supply voltages;
- a load, adapted to receive a desired voltage and coupled to the voltage rails;
- a voltage measuring unit, adapted to measure a supply voltage and to generate information indicative for the supply voltage measured;
- a control element, adapted to:
   - receive from the voltage measuring unit the information;
   - generate instructions to modify the topology of the coupling of the load to the voltage rails when the supply voltage measured is not substantially equal to the desired voltage.

The voltage converting system according to the present invention can be used for powering any electronic or electrical device in for example telecom applications, LED displays where the LEDs can be placed in parallel or series to regulate the light output, etc. The load can for instance be a part of a circuit board, such as for example a processor, memory, ASICs, line drivers, etc. A load according to the invention consists of two parts. The first part is a functional part, which is a combination of passive components, such as resistors, inductors, capacitors, and/or active components, such as transistors. The second part is a bypass capacitor which acts as a local energy source and typically delivers the high frequency portion of the current needed by the functional part. The power source delivers the low frequency and the DC part of the current required by the functional part. Bypass capacitors are used to keep under control the noise generated by the functional part and fed back to the terminals by which the functional part of the load is powered. According to the present invention, the bypass capacitors also supply power to the respective functional parts during modification of the topology of the coupling of the load, i.e. when the first voltage rail and the second voltage rail are not connected to any voltage rail of the voltage rails. The voltage converting system can also be used for one or more loads inside for example an ASIC, a FPGA, a DSP, any other silicon device or electronic apparatus, etc. In accordance with the present invention, the absence of clearly visible convertor modules in the voltage converting system considerably reduces the footprint of a system used to power a component or a chip. This way, the system can be integrated and made compatible with a wider range of sizes of components and devices. The architecture of the voltage converting system is also made simpler and more flexible, which reduces the costs associated with its implementation. The power losses in the system are drastically reduced. The voltage converting system indeed does not require the presence of inductors. The amount of electromagnetic interferences is therefore minimized and the electromagnetic specifications of the voltage converting system comply with the electromagnetic regulations. The reduction of the electromagnetic interferences also limits the heat generation in the voltage converting system and therefore ensures the integrity of the components is preserved without increasing the complexity of the design. The thermal footprint of the voltage converting system for powering a component or a chip is thus improved. Power saving possibilities are offered with the voltage converting system according to the present invention. In many applications, one or more loads of a chip, for instance of a System on Chip or Large Scale Integration chip, do not need to be continuously powered. The voltage converting system according to the present invention allows to optimize the delivery of a supply voltage to loads, by supplying a supply voltage only to loads and/or functional parts that must be used, while to not supply a voltage to loads and/or functional parts that are not used. Not providing power to all the loads at all time, but only to the ones that require it, increases the flexibility, reduces the total power consumption of the voltage converting system and reduces the power waste within the voltage converting system, thereby minimizing the costs associated with its implementation. Additionally, it is possible with the voltage converting system according to the present invention to modify the topology of the coupling of loads to voltage rails as a function of the speed of one or more clocks of the voltage converting system. This allows to modify the topology of the coupling of the loads in function of momentary requirements. Finally, a smooth constant load is guaranteed as a current is continuously drawn from the power source. This significantly lowers the switching noise of the voltage converting system.

According to the present invention, modifying the topology of the coupling of the load is equivalent to modifying the connection of the load to one or to two different voltage rails. The voltage rails to which the load is coupled can be the first voltage rail and the second voltage rail, or two voltage rails from the plurality of voltage rails, or one voltage rail from the plurality of voltage rails and the first voltage rail or the second voltage rail. This way, any voltage rail of the plurality of voltage rails of the voltage converting system can be the first voltage rail or the second voltage rail for one or more given periods of time. In other words, the load may be connected to one of the plurality of voltage rails and directly connected to either the first voltage rail or the second voltage rail, as long as the main voltage is as low as the desired voltage for the load. The information indicative for the supply voltage measured comprises the value of the supply voltage measured. Alternatively, the information indicative for the supply voltage comprises a value calculated from the supply voltage measured, for example half the value of the supply voltage measured, double the value of the supply voltage measured, etc. Alternatively, the information indicative for the supply voltage measured comprises a difference between a value of the supply voltage measured and a value of the desired voltage. In this case, the voltage measuring unit is further adapted to generate a voltage error and the control element is further adapted to receive the voltage error and generate instructions to modify the topology of the coupling of the load to voltage rails according to the voltage error. The supply voltage can be measured directly across the load or it can be measured indirectly by measuring the voltage drop between the voltage rails to which the load is connected or it can be measured indirectly by measuring the voltage drop between the voltage rail to which the load is connected and the first voltage rail or the second voltage rail. The control element of the voltage converting system is an independent unit of the system. Alternatively, the control element is comprised in the load. Alternatively, the control element is comprised in the power source. Alternatively, the control element is comprised in the voltage measuring unit.

Additionally, the voltage converting system according to the present invention offers the possibility to tune a line driver supply voltage in function of the required output power over time. For DSL applications for instance, class-G or class-H line drivers are not necessary anymore, as the system can for example tune the line driver voltage and handle power crests as class-H drivers do, while still demonstrating an improved granularity and finer control of the tuning. Additionally, it is possible with the voltage converting system according to the present invention to cut power from all circuitry which is not needed for generating and transmitting for example a Dying Gasp message in telecom apparatus. The voltage converting system even allows to recuperate part of the energy stored in the bypass capacitors of the loads that do not require a bias during the generation of the Dying Gasp message. Additionally, the topology of the coupling of the load can be moved from a series dominant topology to a parallel dominant topology. This allows to optimize the use of the main voltage of the power source. Additionally, reverse powered applications can rely on the voltage converting system according to the present invention as only the really needed circuitry can be powered, e.g. when a load is being powered by just one line.

According to an optional embodiment, the load further comprises:
- a first load switch adapted to connect the load to a primary load voltage rail;
- a second load switch adapted to connect the load to a secondary load voltage rail; and
wherein the load is further adapted to:
- receive from the control element the instructions; and
- switch the first load switch and/or the second load switch to modify the topology of the coupling of the load to the voltage rails according to the instructions.

This way, the load can be coupled to any of the voltage rails of the plurality of the voltage rails, including the first voltage rail and/or the second voltage rail. In other words, the primary voltage rail is for example a voltage rail from the plurality of the voltage rails, or the first voltage rail or the second voltage rail, while the secondary voltage rail is different from the primary voltage rail and is for example a voltage rail from the plurality of the voltage rails, or the first voltage rail or the second voltage rail. According to the instructions generated by the control element, the load is able to modify the topology of its coupling to voltage rails by switching the first load switch to couple it to a different voltage rail, and/or by switching the second load switch to couple it to a different voltage rail also different from the voltage rail to which the first load switch is coupled. In the event that the load momentarily does not need to be powered, the first load switch of the load and/or the second load switch of the non-powered load may be left disconnected. Alternatively, in the event that the load momentarily does not need to be powered, the first load switch and/or the second load switch are connected to the same voltage rail.

According to an optional embodiment, the power source further comprises:
- a first source switch to connect the first terminal to the first voltage rail;
- a second source switch to connect the second terminal to the second voltage rail; and
wherein the power source is further adapted to:
- receive from the control element the instructions; and
- switch the first source switch and/or the second source switch to modify the topology of the coupling of the first terminal and/or the second terminal to the voltage rails according to the instructions.

This way, the power source can be coupled to any of the voltage rails of the plurality of the voltage rails, including the first voltage rail and/or the second voltage rail. In other words, the first voltage rail is a voltage rail from the plurality of the voltage rails, and the second voltage rail is different from the first voltage rail and is also a voltage rail from the plurality of the voltage rails. According to the instructions generated by the control element, the power source is able to modify the topology of its coupling to voltage rails by switching the first source switch to couple it to a different voltage rail, and/or by switching the second source switch to couple it to a different voltage rail also different from the voltage rail to which the first source switch is coupled.

According to an optional embodiment, the load comprises the voltage measuring unit.

This way, the load is able to measure the supply voltage measured directly. As the voltage measuring unit is integrated in the load, the complexity of the design of the voltage converting system is lowered and its footprint is further reduced, thereby reducing the costs of its implementation.

According to an optional embodiment, the voltage converting system further comprises:
- a plurality of loads similar to the load, each load being adapted to receive a respective desired voltage;
- a plurality of voltage measuring units similar to the voltage measuring unit, each voltage measuring unit adapted to measure a supply voltage and to generate information indicative for the supply voltage measured;
and wherein the control element is further adapted to:
- receive from the plurality of voltage measuring units the information;
- generate instructions to modify the topology of the coupling of one or more of the plurality of loads to the voltage rails when the supply voltage measured for one or more of the plurality of loads is not substantially equal to the respective desired voltage.

The voltage converting system comprises a plurality of loads similar to the load, and each adapted to receive a respective desired voltage. The voltage converting system further comprises a plurality of voltage measuring units where each voltage measuring unit measures the supply voltage either directly across the load, or measures the supply voltage between the voltage rails to which the load is coupled: for example between one voltage rail of the voltage rails and the first voltage rail or the second voltage rail, or for example between the first voltage rail and the second voltage rail or for example between two voltage rails of the voltage rails. The voltage converting system is characterized by an initial topology at start-up. The determination of the initial topology is performed following the requirements of the Kirchhoff's Current Law, also referred to as KCL. Multiple loads, of which each draws less current may be placed in parallel so that the current drawn by these multiple loads substantially matches the current drawn by another load with respect to which these parallel loads are put in series. A load from the plurality of loads may not be able to handle the current drawn by another load of the plurality of loads, even though their respective desired voltages are substantially identical. The initial topology of the system is determined according to these differences in current and preferably includes all the loads that need to be powered. In other words, at start-up of the voltage converting system, the current consumed by the functional part of the load is only known by rough approximation. The bypass capacitors will charge and discharge at a fairly high rate and reconfiguration will be required quite rapidly to keep the voltage across the loads within its requirements. While the actual current drawn by the functional part of the load is then known, the control element determines topologies where the bypass capacitors need to compensate for less current and modifications of the topology need to occur less frequently. This way, the control element generates instructions so that the coupling of the plurality of loads follows an initial topology. The instructions take the desired voltages and the typical drawn currents of each load into account and the initial topology relies on as many voltage rails, including the first and the second voltage rails, as available in order to couple as many loads as possible in series. When the supply voltage measured across one or more loads of the plurality of loads is not substantially equal to the respective desired voltage, the control element generates instructions to modify the topology of the coupling of one or more loads in order to reach a topology for which each of the supply voltages measured across the plurality of loads is substantially equal to the respective desired voltage.

According to an optional embodiment, the control element is further adapted to measure the main voltage.

This way, the control element of the voltage converting system takes variations in the amplitude of the main voltage into account when generating instructions to modify the topology of the coupling of one or more loads of the plurality of loads to voltage rails. This way, the voltage converting system optimizes the use of the main voltage delivered by the power source and the control element handles variations of the amplitude of the main voltage of the power source more accurately. Alternatively, the control element receives a supply voltage measured from each voltage measuring unit of the voltage converting system and calculates the sum of all the supply voltages measured for all the loads in order to calculate the supply voltage.

According to an optional embodiment, each load comprises a communication module adapted to:
- transmit data to one or more loads of the plurality of loads; and
- receive data from one or more loads of the plurality of loads.

This way, the functional part of each load is adapted to transmit data to the functional parts of one or more loads. The functional part of a load is further adapted to receive data from functional parts of one or more loads. The communication of data between functional parts occurs over communication channels which are tolerant to changes in common mode voltages. Examples of such communications are for instance optical, magnetic, radio frequency, waveguides, AC-coupled differential such as Positive Emitter-Coupled logic, also referred to as (P)ECL, Low-Voltage Differential Signaling, also referred to as LVDS, Current Mode Logic, also referred to as CML, etc. The local ground level of each functional part is different. It can for example be a voltage rail of the voltage rails, or the first voltage rail or the second voltage rail. Communication between functional parts must therefore be tolerant for changes in common mode voltages.

According to an optional embodiment, the voltage converting system further comprises a plurality of series regulators coupled to the voltage rails.

This way, in applications where very high accuracy of the voltage rails for individual rails is required, a series regulator is positioned in series between the power source and the plurality of loads. This can be for example a linear or a switching regulator. This way, the series regulator ensures the supply voltage of each of the voltage rails is substantially equal to the nominal supply voltage. The supply voltage therefore does not differ from the nominal supply voltage by more than 3% when relying on dynamic regulation of a switching regulator for instance, and by not more than 1.5% when relying on a linear regulator for instance. Alternatively, the series regulator receives instructions from the control element and arranges the coupling of the plurality of the loads to the voltage rails according to the instructions to comply with the initial topology at start-up of the voltage converting system. The control element ensures that the sum of the operational voltages of all the loads and/or functional parts connected in series is equal to the main voltage delivered by the power source. A small mismatch is compensated by the series regulator, i.e. that the series regulator can be seen as a load itself instructed by the control element about the voltage at which it must operate or instructed by the control element about the current it should draw.

According to an optional embodiment:
- the load is further adapted to draw a desired current;
- the voltage converting system further comprises a dummy load, adapted to receive a supply voltage and coupled to the voltage rails to which the load is coupled;
- the voltage measuring unit is further adapted to measure a current drawn by the load and/or to generate information indicative for the current;
- the control element is further adapted to:
   - receive information indicative for the current; and
   - generate instructions according to the current to modify the topology of the coupling of the load to the voltage rails when the supply voltage measured is not substantially equal to the desired voltage; and
   - generate instructions according to the current to modify the current drawn by the load when the current measured is not substantially equal to the desired current.

The voltage measuring unit is further adapted to measure a current drawn by the load and to generate information indicative for the current measured. This way, a load failure can be identified when the current drawn by the load is substantially lower or higher than the current derived from Ohm's Law from the desired voltage. Alternatively, the load receives information indicative for the current drawn by the load and generates information indicative for the current. Alternatively, the voltage measuring unit measures the supply voltage directly across the load or measures the supply voltage between the voltage rails to which the load is coupled, and generates information indicative for the supply voltage measured. The control element then receives information indicative for the supply voltage measured and calculates information indicative for the current drawn by the load using Ohm's Law. The information indicative for the current comprises the value of the current measured. Alternatively, the information indicative for the current comprises a value calculated from the current measured, for example half the value of the current measured, double the value of the current measured, etc. This way, losses in the voltage converting system are minimized as no additional series sense resistor need to be inserted in the system for measuring the current drawn by the load. Indeed, the series sense resistors and the load are characterized by resistances that are process-, voltage- and temperature-dependent. A change in the operating conditions of the voltage converting system may therefore result in an error from an additional series sense resistor in the measurement of the current drawn by the load. Alternatively, Kirchhoff's Current Law is used by the control element to calculate information indicative for the resistance of the load at start-up of the voltage converting system, and to generate instructions to modify the coupling of the load to one or more voltage rails when the resistance measured is not substantially equal to the resistance at start-up. The dummy load receives instructions from the control element to fine tune the current drawn by the load when the current drawn by the load is not equal to the desired current of the load. This way, the voltage across the load is more accurately tuned. Alternatively, a similar effect than the presence of a dummy load tuning the current drawn by the load can be achieved by directly controlling the current consumed by the load. For example, many amplifiers allow their bias current to be set according to the desired mode of operation, according to the linearity. If a higher bias current can be set than what the load requires for normal operation, the higher bias current may also be used in the same way as a dummy load. Another example relies on the fact that a load can operated with adjustable clock frequency. For such a load, the clock frequency may be tuned higher than necessary for the desired performance so that the load draws more current. Another example is the use of on-die terminations, such as the ones used in Double Data Rate Type 3, also referred to as DDR3. According to a further alternative embodiment, the control element generates instructions for the load according to the current to modify the current drawn by the load when the current measured is not substantially equal to the desired current. For example, the load can increase the current it draws, i.e. draw more current than necessary to perform its normal function, by for instance increasing the bias current, or increasing the clock frequency, or turning on on-die termination, etc.

The bypass capacitors of each load discharge or charge if the current through the load is respectively lower or higher than the current through the functional part of the load. While bypass capacitors charge, the voltage across the bypass capacitors rises in time and is measured by the voltage measuring unit. The difference in voltage across the load in time is therefore a measurement of the current. This provides an equation per set of two voltage rails which are connected by one or more loads. The higher the number of topologies which are determined, the higher the number of available equations is, and the more accurate the current consumption of each load is determined.

According to an optional embodiment, the control element is further adapted to calculate a product of the supply voltage measured and the current for said load.

This way, the control element is able to calculate the power consumed by the load. The total power consumed can for example be used to determine cost of ownership.

According to an optional embodiment:
- each load is further adapted to draw a desired current;
- the voltage converting system further comprises a plurality of dummy loads, each dummy load adapted to receive a supply voltage and coupled to the voltage rails to which the corresponding load is coupled;
- each voltage measuring unit is further adapted to measure a current drawn by the respective load and/or to generate information indicative for the current;
- the control element is further adapted to:
   - receive the information indicative for the current drawn by each of the loads from the plurality of voltage measuring units; and
   - generate instructions according to the current to modify the topology of the coupling of one or more of the plurality of loads to the voltage rails when the supply voltage measured for one or more of the plurality of loads is not substantially equal to the respective desired voltage;
   - generate instructions according to the current for one or more of the plurality of dummy loads to modify the current when the current drawn by one or more corresponding load of the plurality of loads is not substantially equal to the desired current.

The voltage measuring unit is further adapted to measure a current drawn by each load and to generate information indicative for the current measured for each load. This way, one or more load failures can be identified when the current drawn by one or more loads is substantially lower or higher than the current derived from Ohm's Law from the respective desired voltages. Alternatively, the voltage measuring unit measures the supply voltage directly across a respective load or measures the supply voltage between the voltage rails to which the respective load is coupled, and generates information indicative for the supply voltage measured. The control element then receives information indicative for the supply voltages measured for each loads and calculates information indicative for the current drawn by each load using Ohm's Law. The information indicative for the current comprises the value of the current measured. Alternatively, the information indicative for the current comprises a value calculated from the current measured, for example half the value of the current measured, double the value of the current measured, etc. This way, losses in the voltage converting system are minimized as no additional series sense resistor need to be inserted in the system for measuring the current drawn by each loads. Indeed, the series sense resistors and the loads are characterized by resistances that are process-, voltage- and temperature-dependent. A change in the operating conditions of the voltage converting system may therefore result in an error from an additional series sense resistor in the measurement of the current drawn by a load. Alternatively, Kirchhoff's Current Law is used by the control element to calculate information indicative for the resistances of the loads at start-up of the voltage converting system, and to generate instructions to modify the coupling of one or more loads to one or more voltage rails when the respective resistance measured is not substantially equal to the respective resistance at start-up. Alternatively, the information indicative for the current drawn by each load is used by the control element to generate instructions for the initial topology of the coupling of the loads to the voltage rails at start-up of the voltage converting system. According to a further alternative embodiment, the control element is further adapted to generate instructions for each load according to the current to modify the current drawn by the load when the current measured is not substantially equal to said desired current. Multiple loads, of which each draws less current may be placed in parallel so that the current drawn by these multiple loads substantially matches the current drawn by another load with respect to which these parallel loads are put in series. For example, a first set of 10 loads uses 1A of current, while a second set of 10 different loads uses a current of 100mA. In the initial topology, the first set of 10 loads are positioned in series, while the second set of 10 loads are positioned in a parallel circuit that is in series with respect to the circuit in series of the first set of 10 loads.

For example, when two loads are temporarily connected in series to each other, the functional part of one of the loads can for example consume more current than the functional part of the other load. Since both loads are in series, and according to Kirchhoff's Current Law, the total current through the two loads must be equal. The magnitude of the total current is comprised between the current consumed by each of the two functional parts of the two loads. The difference between the series current and the current required by the first functional block is taken out of the bypass capacitors of the first load. The difference between the series current and the current required by the second functional part is stored in the bypass capacitors of the second load. This results in a reduction of the voltage across the first load and an increase in the voltage across the second load. If the supply voltage measured across each of the loads is not substantially equal to the desired voltages of each of the loads, the topology of the coupling of the loads must be modified. The smaller the difference in current required by the first and second functional parts, the slower the voltages will change. This way, if for example the current drawn by the second load can be increased in order to make it equal to the current drawn by the first load, the voltage across the loads remains constant and the topology of the coupling of the two loads does not need to be modified.

When modifying the topology of the coupling of one or more of the plurality of loads, the control element ensures that the current through each load is as close as possible to the current through the functional part of the corresponding load. The current is in this case considered as the current from DC to somewhat below the reconfiguration frequency of the load balanced switching convertor, from which the bypass capacitors take over. When modifying the topology, the control element ensures that only loads that operate at the same voltage are connected in parallel to each other. The control element ensures that loads which draw nearly the same current can be connected in series to each other. Functional blocks can comprise a series and/or a parallel combination of loads as long as each underlying series/parallel topology of loads complies with the two previous requirements about voltage and current. The control element ensures that the sum of the operational voltage of all the loads connected in series is equal to the main voltage delivered by the power source. The current of all the loads connected to a certain voltage rail must comply with the requirements of Kirchhoff's Current Law. Any mismatch between the measured currents in/out a voltage rail and the requirements of Kirchhoff's Current Law is caused by a deviation between the actual and the typical resistance of the first source switch and/or the second source switch. But the resistance of the switches is not exactly known. For each topology of coupling of the plurality of loads however, an equation can be determined and illustrate the mismatch per voltage rail. Each new topology will provide a new equation for each voltage rail. The higher the number of topologies that are generated, the more accurate the resistance of the switches can be identified. Changes of the value of the resistance as a function of time, induced for example by changes in temperature, are also taken into account in this iterative determination of the resistance of the switches.

According to an optional embodiment, the control element is further adapted to:
- calculate a product of the supply voltage measured and the current for each of the plurality of loads; and
- calculate a sum of the products for the plurality of loads.

This way, the control element is able to calculate the power consumed by each load. The control element generates instructions to modify the topology of the coupling of one or more loads to one or more voltage rails when one or more supply voltages measured are not substantially equal to the respective desired voltages, and optimizes the resulting new topology of the coupling in order to minimize the power used by each load, thereby minimizing the total power required by the voltage converting system.

According to an optional embodiment, there is provided a load comprising:
- a first load switch adapted to connect the load to a primary load voltage rail;
- a second load switch adapted to connect the load to a secondary load voltage rail; and
- a voltage measuring unit configured to:
   - measure a supply voltage;
   - generate information indicative for the supply voltage measured; and
   - provide the information to a control element;
and wherein the load is adapted to:
- receive from the control element instructions to modify the topology of the coupling of the load to the voltage rails when the supply voltage measured is not substantially equal to the desired voltage; and
- switch the first load switch and/or the second load switch to modify the topology of the coupling of the load to the voltage rails according to the instructions.

In accordance with the present invention, the load can for instance be a part of a circuit board, such as for example a processor, memory, ASICs, line drivers, etc. The absence of clearly visible convertor modules to modify the topology of the coupling of the load to voltage rails considerably reduces the footprint of the powering system. From the point of view of the design of a circuit, the architecture of the powering system is also made simpler and more flexible, which reduces the costs associated with its implementation. The power losses in the system are drastically reduced. The architecture does not require switching converters, such as buck or boost convertors, and therefore, no inductors are needed to filter out possible switching currents. This minimizes the amount of electromagnetic interferences and the electromagnetic specifications of the load therefore comply with the electromagnetic regulations. The reduction of the electromagnetic interferences also limits the heat generation and therefore ensures the integrity of the load is preserved without increasing the complexity of the design. Additionally, in many applications, one or more loads of a chip, for instance of a System on Chip or Large Scale Integration chip, do not need to be continuously powered. The delivery of supply voltages to only loads and/or functional parts that require a supply voltage is optimized. Loads and/or functional parts that are not used over a period of time can switch their respective first load switches and second load switches in order not to receive a supply voltage. Not providing power to all the loads at all time, but only to the ones that require it, increases the flexibility, reduces the total power consumption and reduces the power waste, thereby minimizing the costs associated with the implementation of the load. Additionally, it is possible with the voltage converting system according to the present invention to modify the topology of the coupling of loads to voltage rails as a function of the speed of one or more clocks of the voltage converting system. This allows to modify the topology of the coupling of the loads in function of momentary requirements. Finally, a smooth constant load is guaranteed as a current is continuously drawn from the power source. This significantly lowers the switching noise of the load.

According to the present invention, modifying the topology of the coupling of the load is equivalent to modifying the connection of the load to one or to two different voltage rails. The voltage rails to which the load is coupled can be the first voltage rail and the second voltage rail, or two voltage rails from the plurality of voltage rails, or one voltage rail from the plurality of voltage rails and the first voltage rail or the second voltage rail. This way, any voltage rail can be the primary load voltage rail or the secondary load voltage rail for one or more given periods of time. The information indicative for the supply voltage measured comprises the value of the supply voltage measured. Alternatively, the information indicative for the supply voltage comprises a value calculated from the supply voltage measured, for example half the value of the supply voltage measured, double the value of the supply voltage measured, etc. Alternatively, the information indicative for the supply voltage measured comprises a difference between a value of the supply voltage measured and a value of the desired voltage. In this case, the voltage measuring unit is further adapted to generate a voltage error and the control element is further adapted to receive the voltage error and generate instructions to modify the topology of the coupling of the load to voltage rails according to the voltage error. The control element is an independent unit. Alternatively, the control element is comprised in the load. Alternatively, the control element is comprised in the voltage measuring unit.

According to an optional embodiment, there is provided a power supply adapted to deliver a main voltage and comprising:
- a first terminal and a second terminal;
- a first source switch to connect the first terminal to a first voltage rail;
- a second source switch to connect the second terminal to a second voltage rail; and
wherein the power source is further adapted to:
- receive from a control element instructions to modify the topology of the coupling of a load to voltage rails comprising the first voltage rail and the second voltage rail when a supply voltage measured across the load is not substantially equal to a desired voltage; and
- switch the first source switch and/or the second source switch to modify the topology of the coupling of the first terminal and/or the second terminal to the voltage rails according to the instructions.

According to embodiments of the present invention, there is provided a method for supplying a plurality of supply voltages, the method comprising the steps of:
- connecting a first voltage rail and a second voltage rail respectively to a first terminal and a second terminal of a power source;
- providing one or more voltage rails between the first voltage rail and the second voltage rail;
- coupling a load between two of the one or more voltage rails;
- measuring a supply voltage;
- generating information indicative for the supply voltage measured; and
- generating instructions to modify the topology of the coupling of the load to the voltage rails when the supply voltage measured is not substantially equal to a desired voltage.

In accordance with the present invention, the absence of clearly visible convertor modules considerably reduces the footprint of the power source. The architecture of the power source is also made simpler and more flexible, which reduces the costs associated with its implementation. The power losses are drastically reduced. The architecture does not require switching converters, such as buck or boost convertors, and therefore, no inductors are needed to filter out possible switching currents. This minimizes the amount of electromagnetic interferences and the electromagnetic specifications of the power source therefore comply with the electromagnetic regulations. The reduction of the electromagnetic interferences also limits the heat generation and therefore ensures the integrity of the power source is preserved without increasing the complexity of the design. The thermal footprint of the power source is thus improved. The delivery of a supply voltage converted from the main voltage is optimized by supplying a supply voltage only to loads and/or functional parts that must be used, while loads and/or functional parts that are not used are not receiving a supply voltage. Not providing power to all the loads at all time, but only to the ones that require it, increases the flexibility, reduces the total power consumption and reduces the power waste, thereby minimizing the costs associated with the implementation of the power source. Additionally, it is possible to modify the topology of the coupling of the power source to voltage rails as a function of the speed of one or more clocks. This allows to modify the topology of the coupling of the power source in function of momentary requirements. Finally, a smooth constant load is guaranteed as a current is continuously drawn from the power source. This significantly lowers the switching noise of the power source.

According to the present invention, modifying the topology of the coupling of the load is equivalent to modifying the connection of the load to one or to two different voltage rails. The voltage rails to which the load is coupled can be one or two voltage rails from the plurality of voltage rails and/or the first voltage rail and/or the second voltage rail. This way, any voltage rail of the plurality of voltage rails of the voltage converting system can be the first voltage rail or the second voltage rail for one or more given periods of time. In other words, the load may be connected to one of the plurality of voltage rails and directly connected to either the first voltage rail or the second voltage rail, as long as the main voltage is as low as the desired voltage for the load. The information indicative for the supply voltage measured comprises the value of the supply voltage measured. Alternatively, the information indicative for the supply voltage comprises a value calculated from the supply voltage measured, for example half the value of the supply voltage measured, double the value of the supply voltage measured, etc. Alternatively, the information indicative for the supply voltage measured comprises a difference between a value of the supply voltage measured and a value of the desired voltage. In this case, the voltage measuring unit is further adapted to generate a voltage error and the control element is further adapted to receive the voltage error and generate instructions to modify the topology of the coupling of the load to voltage rails according to the voltage error. The supply voltage can be measured directly across the load or it can be measured indirectly by measuring the voltage drop between the voltage rails to which the load is connected or it can be measured indirectly by measuring the voltage drop between the voltage rail to which the load is connected and the first voltage rail or the second voltage rail. The control element of the voltage converting system is an independent unit of the system. Alternatively, the control element is comprised in the load. Alternatively, the control element is comprised in the power source. Alternatively, the control element is comprised in the voltage measuring unit.

When modifying the topology of the coupling of one or more of the plurality of loads, the control element ensures that the current through each load is as close as possible to the current through the functional part of the corresponding load. The current is in this case considered as the current from DC to somewhat below the reconfiguration frequency of the load balanced switching convertor, from which the bypass capacitors take over. When modifying the topology, the control element ensures that loads that operate at the same voltage are connected in parallel to each other. The control element ensures that loads which draw nearly the same current can be connected in series to each other. Functional blocks can comprise a series and/or a parallel combination of loads as long as each underlying series/parallel topology of loads complies with the two previous requirements about voltage and current. The control element ensures that the sum of the operational voltage of all the loads connected in series is equal to the main voltage delivered by the power source. The current of all the loads connected to a certain voltage rail must comply with the requirements of Kirchhoff's Current Law. Any mismatch between the measured currents in/out a voltage rail and the requirements of Kirchhoff's Current Law is caused by a deviation between the actual and the typical resistance of the first source switch and/or the second source switch. But the resistance of the switches is not exactly known. For each topology of coupling of the plurality of loads however, an equation can be determined and illustrate the mismatch per voltage rail. Each new topology will provide a new equation for each voltage rail. The higher the number of topologies that are generated, the more accurate the resistance of the switches can be identified. Changes of the value of the resistance as a function of time, induced for example by changes in temperature, are also taken into account in this iterative determination of the resistance of the switches.

For each topology of coupling, the control element is adapted to comply with rules when modifying the topology of the coupling of the load to voltage rails when the supply voltage measured is not substantially equal to the desired voltage. The first rule is that loads which can operate at the same voltage can be connected in parallel to each other. The second rule is that loads which draw nearly the same current can be connected in series to each other. Alternatively, loads may consist of combinations of loads coupled in series and/or in parallel as long as each underlying topology in series and/or in parallel complies with the first and the second rule. The third rule is that the sum of the operational voltages of all the loads connected and/or coupled in series must be equal to the main voltage. For the third rule, a relatively small mismatch may be compensated by a series regulator. The voltage at which the load operates is used by the control element to comply with the first and the third rules. For the second rule, the control element needs to know the current that is drawn by the load. For each topology of the coupling, the control element therefore ensures these three rules are satisfied over time.

### Brief Description of the Drawings

Fig. 1A and Fig. 1B schematically illustrate an embodiment of a prior art system for supplying a plurality of supply voltages.
Fig. 2 schematically illustrates the embodiment of a system for supplying a plurality of supply voltages to 2 loads.
Fig. 3 schematically illustrates the embodiment of a system for supplying a plurality of supply voltages to 3 loads.
Fig. 4 schematically illustrates an embodiment of a load.
Fig. 5 schematically illustrates an alternative embodiment of a system for supplying a plurality of supply voltages comprising a series regulator, where each load comprises a voltage measuring unit.
Fig. 6 schematically illustrates an alternative embodiment of a system for supplying a plurality of supply voltages where each load comprises a communication module.
Fig. 7 schematically illustrates an alternative embodiment of a system for supplying a plurality of voltages at a given instant t₁.
Fig. 8 schematically illustrates the embodiment of the system of Figure 7 at an instant t₂ later than t₁.

### Detailed Description of Embodiment(s)

According to an embodiment shown in Fig. 1A, a system 1 comprises a primary controller 50, four voltage rails 51;52;53;54, and five loads 55;56;57;58;59. The system 1 supplies all the required voltages from a main voltage delivered by a single primary controller 50 to the loads 55;56;57;58;59. The primary controller 50 typically has an input voltage 40 of for example 48V for telecom applications. The main voltage is then stepped down to a plurality of levels of supply voltages. Each level of supply voltage is then routed along a voltage rail 51;52;53;54. The supply voltages are finally delivered to one or more loads 55;56;57;58;59 which can be physically distant by for example hundreds of millimetres, several meters, etc. For instance, as visible on Fig. 1A, the loads 55 labelled A and 59 labelled E receive a voltage of 3.3V, while the load 56 labelled B receives a voltage of 2.5V, the load 57 labelled C receives a voltage of 1.8V and the load 58 labelled D receives a voltage of 0.9V.

According to an embodiment shown in Fig. 1B, an alternative to the use of a primary controller with multiple outputs is the deployment of Points-Of-Loads, also referred to as POL, which generate the supply voltages out of an intermediate or so-called bus voltage. Fig. 1B schematically shows a system 1 for a distributed bus with a two-steps conversion process. As visible on Fig. 1B, a plurality of bus voltages 61 ;62;63 are generated from a larger, more powerful converter 60 that receives an input voltage 40 of for example 48V for telecom applications. The bus voltages 61;62;63 are generated to deliver for example 6V to 12V. A second conversion step is performed by Point-Of-Load converters 64;65;66;67;68 which take the distributed bus voltage and convert it, i.e. step it down, to the required supply voltage at the point at which the circuit consumes the highest power. For example in Fig. 1B, the POLs 64;67 labelled A and D deliver a voltage of 3.3V, while the POL 65 labelled B delivers a voltage of 2.5V, the POL 66 labelled C delivers a voltage of 1.8V and the POL 68 labelled E delivers a voltage of 0.9V.

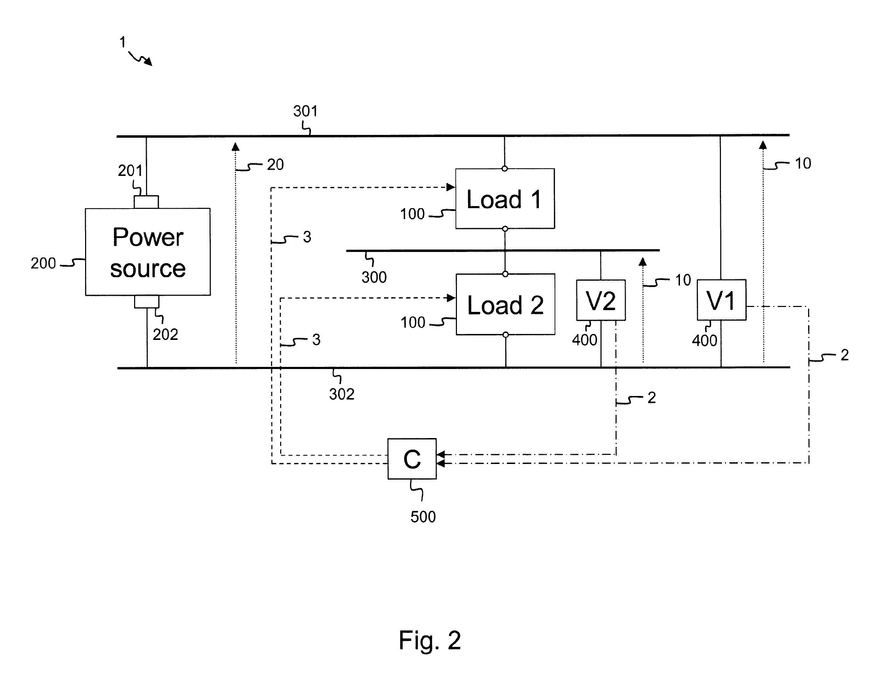

According to an embodiment shown in Fig. 2, a system 1 comprises a power source 200, two loads 100 labelled load 1 and load 2, two voltage measuring units 400 labelled V1 and V2, a first voltage rail 301, a second voltage rail 302, a voltage rail 300, and a control element 500. The power source 200 comprises a first terminal 201 and a second terminal 202, and delivers a main voltage 20. The voltage rails 300;301;302 are adapted to deliver a plurality of supply voltages 10 to the loads 100 from the main voltage 20. The load 100 labelled load 1 is coupled to the first voltage rail 301 and the voltage rail 300. The load 100 labelled load 2 is coupled to the second voltage rail 302 and the voltage rail 300. The voltage measuring unit 400 labelled V1 is adapted to measure the sum of the supply voltages 10 across the load 100 labelled load 1 and the load 100 labelled load 2 between the first voltage rail 301 and the second voltage rail 302. In this case, the supply voltage across the load 100 labelled load 1 is derived by subtracting the supply voltage 10 measured by the voltage measuring unit 400 labelled V2 from the supply voltage 10 measured by the voltage measuring unit 400 labelled V1. Alternatively, the voltage measuring unit 400 labelled V1 is adapted to measure the supply voltage 10 between the voltage rail 300 and the first voltage rail 301. The voltage measuring unit 400 labelled V2 is adapted to measure the supply voltage 10 across the load 100 labelled load 2, i.e. between the voltage rail 300 and the second voltage rail 302. Alternatively, the voltage measuring unit 400 labelled V1 is adapted to measure the sum of the supply voltages 10 across the load 100 labelled load 1 and the load 100 labelled load 2 between the first voltage rail 301 and the second voltage rail 302. In this case, the supply voltage across the load 100 labelled load 2 is derived by subtracting the supply voltage 10 measured by the voltage measuring unit 400 labelled V1 from the supply voltage 10 measured by the voltage measuring unit 400 labelled V2. The voltage measuring unit 400 labelled V1 generates information 2 indicative for the sum of the supply voltage 10 measured across the load 100 labelled load 1 and the load 100 labelled load 2 and sends this information 2 to the control element 500. The voltage measuring unit 400 labelled V2 generates information 2 indicative for the supply voltage 10 measured across the load 100 labelled load 2 and sends this information 2 to the control element 500. When one of the supply voltages 10 measured is not substantially equal to a respective desired voltage of the loads 100 labelled load 1 and load 2, the control element 500 generates instructions 3 to modify the topology of the coupling of load 1 and/or load 2 to couple load 1 and/or load 2 to one or two different voltage rails 300;301;302. According to an alternative embodiment, the system 1 comprises a plurality of loads 100, such as for example tens, hundreds, thousands of loads, etc, and a plurality of voltage rails 300, such as for example tens, hundreds, thousands of rails, etc. According to an alternative embodiment, the load 100 comprises the voltage measuring unit 400. According to a further alternative embodiment, the control element 500 is comprised in the load 100. According to a further alternative embodiment, the control element 500 is comprised in the power source 200.

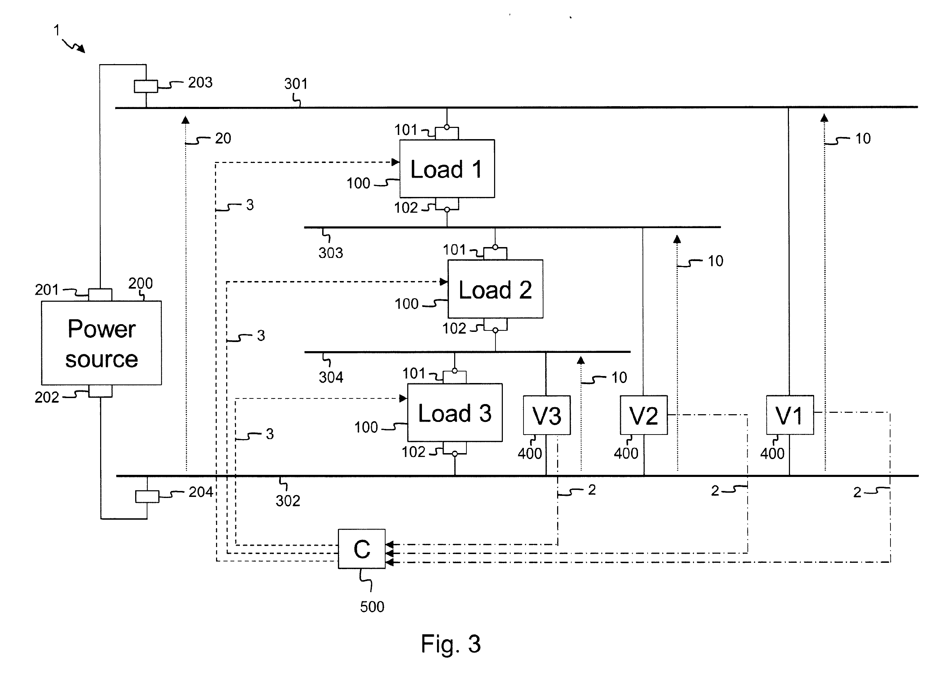

According to an embodiment shown in Fig. 3, a system 1 comprises a power source 200, three loads 100 labelled load 1 and load 2 and load 3, three voltage measuring units 400 labelled V1 and V2 and V3, a first voltage rail 301, a second voltage rail 302, a primary load voltage rail 303, a secondary load voltage rail 304, and a control element 500. Components having identical reference numbers to components in Fig. 2 perform the same function. The power source 200 comprises a first terminal 201 and a second terminal 202, and delivers a main voltage 20. The power source 200 comprises a first source switch 203 to connect the first terminal 201 to the first voltage rail 301, and a second source switch 204 to connect the second terminal 202 to the second voltage rail 302. The voltage rails 301;302;303;304 are adapted to deliver a plurality of supply voltages 10 to the loads 100 from the main voltage 20. The load 100 labelled load 1 is coupled to the first voltage rail 301 and the primary load voltage rail 303. The load 100 labelled load 2 is coupled to the primary load voltage rail 303 and the secondary load voltage rail 304. The load 100 labelled load 3 is coupled to the secondary load voltage rail 304 and the second voltage rail 302. The voltage measuring unit 400 labelled V1 is adapted to measure the supply voltage 10 between the first voltage rail 301 and the second voltage rail 302, i.e. the sum of the supply voltages across the loads 100 labelled load 1 and load 2 and load 3. The voltage measuring unit 400 labelled V2 is adapted to measure the supply voltage 10 between the voltage rail 303 and the second voltage rail 302, i.e. the sum of the supply voltages across the loads 100 labelled load 2 and load 3. In this case, the supply voltage across the load 100 labelled load 2 is derived by subtracting the supply voltage 10 measured by the voltage measuring unit 400 labelled V3 across the load 100 labelled load 3 from the supply voltage 10 measured by the voltage measuring unit 400 labelled V2. The voltage measuring unit 400 labelled V3 is adapted to measure the supply voltage 10 between the voltage rail 304 and the second voltage rail 302, i.e. across the load 100 labelled load 3. Alternatively, the voltage measuring unit 400 labelled V1 is adapted to measure the supply voltage 10 between the voltage rail 303 and the first voltage rail 301, i.e. across the load 100 labelled load 1. Alternatively, the voltage measuring unit 400 labelled V2 is adapted to measure the supply voltage 10 between the voltage rail 304 and the first voltage rail 301. In this case, the supply voltage across the load 100 labelled load 2 is derived by subtracting the supply voltage 10 measured by the voltage measuring unit 400 labelled V1 across the load 100 labelled load 1 from the supply voltage 10 measured by the voltage measuring unit 400 labelled V2 when the voltage measuring unit 400 labelled V1 is adapted to measure the supply voltage 10 between the voltage rail 303 and the first voltage rail 301. Each load comprises a first load switch 101 and a second load switch 102. The voltage measuring unit 400 labelled V1 generates information 2 indicative for the sum of the supply voltages measured across the loads 100 labelled load 1 and load 2 and load 3 and sends this information 2 to the control element 500. The voltage measuring unit 400 labelled V2 generates information 2 indicative for the sum of the supply voltages measured across the loads 100 labelled load 2 and load 3 and sends this information 2 to the control element 500. The voltage measuring unit 400 labelled V3 generates information 2 indicative for the supply voltage 10 measured across the load 100 labelled load 3 and to send this information 2 to the control element 500. When one of the supply voltages 10 measured is not substantially equal to a respective desired voltage of the loads 100 labelled load 1 to 3, the control element 500 generates instructions 3 to modify the topology of the coupling of load 1 and/or load 2 and/or load 3 to couple load 1 and/or load 2 and/or load 3 to one or two different voltage rails 301;302;303;304. The system 1 visible in Fig. 3 comprises 3 loads 100 labelled load 1 and load 2 and load 3. According to a further alternative embodiment, the system 1 comprises a plurality of loads 100, such as for example tens, hundreds, thousands of loads, etc, and a plurality of voltage rails 300, such as for example tens, hundreds, thousands of rails, etc.

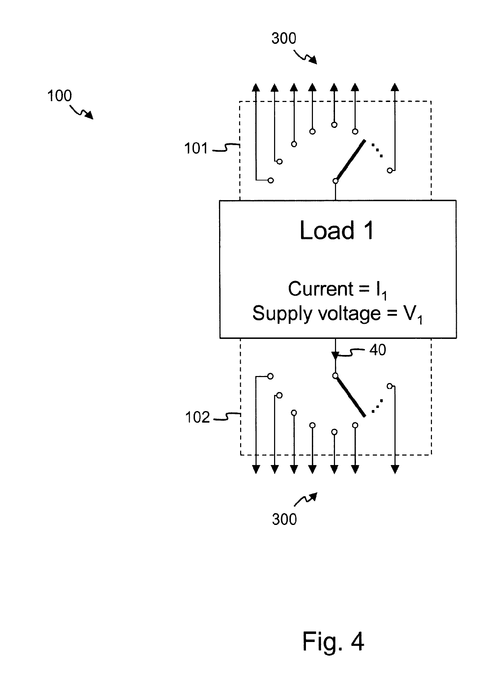

According to an embodiment shown in Fig. 4, a load 100 comprises a first load switch 101, a second load switch 102. The first load switch 101 couples the load 100 to one voltage rail of a plurality of voltage rails 300 or to the first voltage rail 301 or to the second voltage rail 302, or to no voltage rail. The second load switch 102 couples the load 100 to one voltage rail of a plurality of voltage rails 300 or the first voltage rail 301 or to the second voltage rail 302, or to no voltage rail. According to an alternative embodiment, the first load switch 101 and/or the second load switch 102 couples the load 100 to another load of the plurality of loads. According to an alternative embodiment, the first load switch 101 and/or the second load switch 102 couples the load 100 to two or more loads of the plurality of loads coupled in parallel.

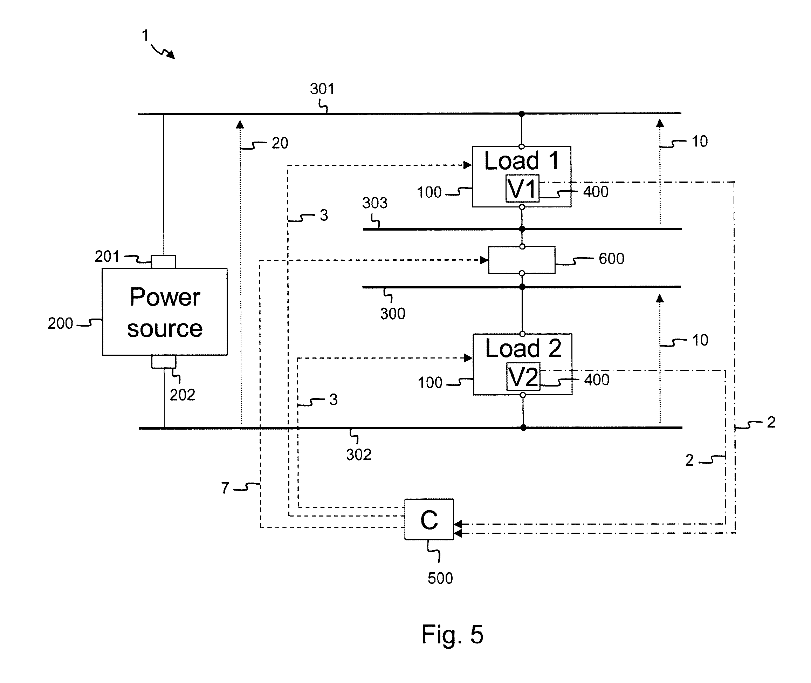

According to an embodiment shown in Fig. 5, a system 1 comprises a power source 200, two loads 100 labelled load 1 and load 2, two voltage measuring units 400 labelled V1 and V2, a first voltage rail 301, a second voltage rail 302, a voltage rail 300, a voltage rail 303, a series regulator 600, and a control element 500. Components having identical reference numbers to components in Fig. 2 perform the same function. The power source 200 comprises a first terminal 201 and a second terminal 202, and delivers a main voltage 20. The voltage rails 300;301 ;302;303 are adapted to deliver a plurality of supply voltages 10 to the loads 100 from the main voltage 20. A series regulator 600 is coupled to the voltage rail 303 and to the voltage rail 300. The load 100 labelled load 1 is coupled to the first voltage rail 301 and the voltage rail 303. The load 100 labelled load 2 is coupled to the second voltage rail 302 and the voltage rail 300. The voltage measuring unit 400 labelled V1 is comprised in the load 100 labelled 1 and is adapted to measure the supply voltage 10 across the load 100 labelled load 1. The voltage measuring unit 400 labelled V2 is comprised in the load 100 labelled load 2 and is adapted to measure the supply voltage 10 across the load 100 labelled load 2. The voltage measuring unit 400 labelled V1 generates information 2 indicative for the supply voltage 10 measured across the load 100 labelled load 1 and sends this information 2 to the control element 500. The voltage measuring unit 400 labelled V2 generates information 2 indicative for the supply voltage 10 measured across the load 100 labelled load 2 and sends this information 2 to the control element 500. When one of the supply voltages 10 measured is not substantially equal to a respective desired voltage of the loads 100 labelled load 1 and load 2, the control element 500 generates instructions 3 to modify the topology of the coupling of load 1 and/or load 2 to couple load 1 and/or load 2 to one or two different voltage rails 300;301;302;303. When the supply voltages 10 are not substantially equal to the respective desired voltages of the loads 100 labelled load 1 and load 2, the control element 500 generates instructions 7 to the series regulator 600 to increase or decrease the voltage drop across the series regulator 600. The supply voltage 10 delivered between the voltage rails 301 and 303 is substantially equal to the supply voltage 10 delivered between the voltage rails 302 and 300. According to an alternative embodiment, the supply voltage 10 delivered between the voltage rails 301 and 303 is substantially different from the supply voltage 10 delivered between the voltage rails 300 and 302. According to a further alternative embodiment, the system 1 comprises a plurality of loads 100, such as for example tens, hundreds, thousands of loads, etc, and a plurality of voltage rails 300, such as for example tens, hundreds, thousands of rails, etc. According to a further alternative embodiment, the system 1 comprises a plurality of series regulators 600, such as for example tens, hundreds of series regulators. According to a further alternative embodiment, the control element 500 is comprised in the load 100. According to a further alternative embodiment, the control element 500 is comprised in the power source 200. According to a further alternative embodiment, the voltage measuring 400 labelled V1 is not comprised in the load 100 labelled load 1 and is adapted to measure the supply voltage 10 between the first voltage rail 301 and the voltage rail 303; and/or the voltage measuring unit 400 labelled V2 is not comprised in the load 100 labelled load 2 and is adapted to measure the supply voltage 10 between the second voltage rail 302 and the voltage rail 300. According to an alternative embodiment, the system 1 comprises a plurality of voltage measuring units 400, for example tens, hundreds or thousands, etc, adapted to measure the supply voltage between a voltage rail 300 and the first voltage rail 301 or the second voltage rail 302 or between two voltage rails 300 or across a load 100.

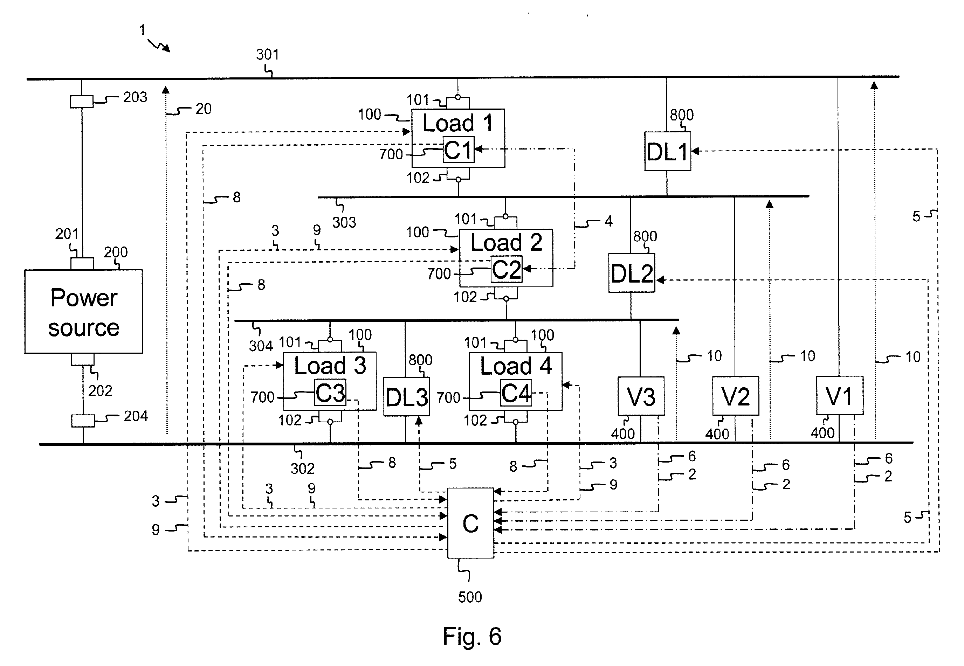

According to an embodiment shown in Fig. 6, a system 1 comprises a power source 200, four loads 100 labelled load 1 to 4, three dummy loads 800 labelled DL1 to DL3, three voltage measuring units 400 labelled V1 to V3, four communication modules 700 labelled C1 to C4, a first voltage rail 301, a second voltage rail 302, a primary load voltage rail 303, a secondary load voltage rail 304, and a control element 500. Components having identical reference numbers to components in Fig. 2 perform the same function. The dummy load 800 labelled DL1 is coupled to the same voltage rails than the corresponding load 100 labelled load 1. The dummy load 800 labelled DL2 is coupled to the same voltage rails than the corresponding load 100 labelled load 2. The dummy load 800 labelled DL3 is coupled to the same voltage rails than the loads 100 labelled load 3 and load 4. The power source 200 comprises a first terminal 201 and a second terminal 202, and delivers a main voltage 20. The power source 200 comprises a first source switch 203 to connect the first terminal 201 to the first voltage rail 301, and a second source switch 204 to connect the second terminal 202 to the second voltage rail 302. Each load 100 labelled load 1 to 4 comprises a communication module 700 respectively labelled C1 to C4. The voltage measuring units 400 labelled V1 to V3 are measuring a respective supply voltage 10 between the voltage rail to which the corresponding load is coupled and the second voltage rail 302. Alternatively, the voltage measuring units 400 labelled V1 to V3 are measuring a respective supply voltage 10 between the voltage rail to which the corresponding load is coupled and the first voltage rail 301. The loads 100 labelled load 3 and load 4 are coupled to the same voltage rails 304 and 302. The supply voltages across the loads 100 labelled load 3 and load 4 are substantially identical. The supply voltages across load 1 and load 2 and loads 3 and 4 are substantially identical. According to an alternative embodiment, the supply voltages across the loads 100 labelled load 1 and load 2 are different from the supply voltage across the loads 100 labelled load 3 and load 4. According to a further alternative embodiment, the supply voltage across the load 100 labelled load 1 is different from the supply voltage across the load 100 labelled load 2. The system 1 visible in Fig. 6 comprises 4 loads 100 labelled load 1 to load 4. According to a further alternative embodiment, the system 1 comprises a plurality of loads 100, such as for example tens, hundreds, thousands of loads, etc, and a plurality of voltage rails 300, such as for example tens, hundreds, thousands of rails, etc. The voltage measuring units 400 measure the current drawn by the loads 100 and generate information 6 indicative for the current drawn and measured. Information 6 indicative for the current can for example be the value of the current determined by the voltage measuring unit using Ohm's law. Alternatively, information 6 indicative for the current is for example half of the value of the current, etc. The dummy loads 800 labelled DL1 to DL3 receive instructions 5 from the control element 500 to modify the current the respective dummy loads DL1 through DL3 need to draw to come to a more stable current distribution. According to a further alternative embodiment, each communication modules 700 measures the current drawn by the respective load 100 and generates information 8 indicative for the current drawn and measured. According to an alternative embodiment, loads 100 labelled load 1 to load 4 receive instructions 9 from the control element 500 to modify the currents the respective loads 100 labelled load 1 to load 4 draw by increasing or decreasing their power consumption. According to an alternate embodiment, the communication module 700 labelled C1 of load 100 labelled load 1 is receiving and transmitting data 4 such as information 8 with the communication module 700 labelled C2 of load 100 labelled load 2.

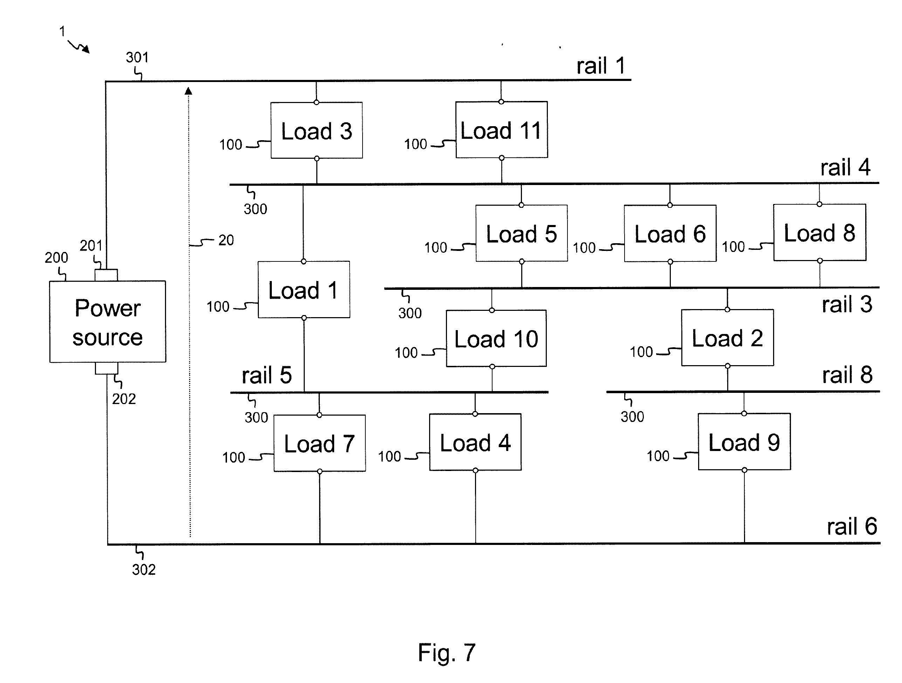

According to an embodiment shown in Fig. 7, a system 1 at an instant t₁ comprises a power source 200, 11 loads 100 labelled load 1 to 11, a first voltage rail 301 labelled rail 1, a second voltage rail 302 labelled rail 6, and a plurality of voltage rails 300 labelled rail 3 to rail 5 and a voltage rail 300 labelled rail 8. The system 1 further comprises two voltage rails 300 labelled rail 2 and rail 7 which are not coupled to any load 100. Components having identical reference numbers to components in Fig. 6 perform the same function. The power source 200 comprises a first terminal 201 and a second terminal 202, and delivers a main voltage 20. The loads 100 labelled load 3 and load 11 are coupled to the voltage rails 301 labelled rail 1 and 300 labelled rail 4. The loads 100 labelled load 7 and load 4 are coupled to the voltage rails 300 labelled rail 5 and 302 labelled rail 6. The load 100 labelled load 9 is coupled to the voltage rails 300 labelled rail 8 and 302 labelled rail 6. The loads 100 labelled load 5, 6 and 8 are coupled to the voltage rails 300 labelled rail 4 and 3. The load 100 labelled load 1 is coupled to the voltage rails 300 labelled rails 4 and 5. The load 100 labelled load 10 is coupled to the voltage rails 300 labelled rails 3 and 5. The load 100 labelled load 2 is coupled to the voltage rails 300 labelled rails 3 and 8. The loads 100 labelled load 3 and load 11 are coupled to the same voltage rails 301 labelled rail 1 and 300 labelled rail 4. The supply voltages 10 for the loads 100 labelled load 3 and load 11 are substantially identical. The loads 100 labelled load 5 and load 6 and load 8 are coupled to the same voltage rails 300 labelled rail 4 and 300 labelled rail 3. The supply voltages 10 for the loads 100 labelled load 5 and load 6 and load 8 are substantially identical. The loads 100 labelled load 4 and load 7 are coupled to the same voltage rails 300 labelled rail 5 and 302 labelled rail 6. The supply voltages 10 for the loads 100 labelled load 4 and load 7 are substantially identical. The sum of the currents drawn by loads 100 labelled load 3 and load 11 from voltage rail 301 labelled rail 1 is equal to the current sourced by loads 100 labelled load 3 and load 11 into supply rail 300 labelled rail 4. The sum of the currents sourced by loads 100 labelled load 3 and load 11 into voltage rail 300 labelled rail 4 is equal to the current drawn 100 labelled load 1 and load 5 and load 6 and load 8 from supply rail 300 labelled rail 4. The sum of the currents drawn by loads 100 labelled load 5 and load 6 and load 8 from voltage rail 300 labelled rail 4 is equal to the current sourced by loads 100 labelled load 5 and load 6 and load 8 into supply rail 300 labelled rail 3. The sum of the currents drawn by loads 100 labelled load 10 and load 2 from voltage rail 300 labelled rail 3 is equal to the current sourced by loads 100 labelled load 5 and load 6 and load 8 into supply rail 300 labelled rail 3. The sum of the currents sourced by loads 100 labelled load 1 and load 10 into voltage rail 300 labelled rail 5 is equal to the current drawn 100 labelled load 7 and load 4 from supply rail 300 labelled rail 5. The current sourced by load 100 labelled load 2 into voltage rail 300 labelled rail 8 is equal to the current drawn by load 100 labelled load 9 from supply rail 300 labelled rail 8. The sum of the currents drawn by loads 100 labelled load 3 and load 11 from voltage rail 301 labelled rail 1 is equal to the current sourced by loads 100 labelled load 7 and load 4 and load 9 into supply rail 302 labelled rail 6. By applying Kirchhoffs current law, a control element of the system 1 ensures that, for each topology of coupling of the loads 100 over time, loads 100 which can operate at the same voltage can be connected in parallel to each other, and that loads 100 which draw nearly the same current can be connected in series to each other.

According to an alternative embodiment, one or more of the supply voltages for the loads 100 are substantially different. According to a further alternative embodiment, the system 1 comprises a plurality of loads 100, such as for example tens, hundreds, thousands of loads, etc, and a plurality of voltage rails 300, such as for example tens, hundreds, thousands of rails, etc. According to a further alternative embodiment, the system 1 of Fig. 7 comprises one or more voltage measuring units, and/or one or more dummy loads, and/or one or more series regulators.

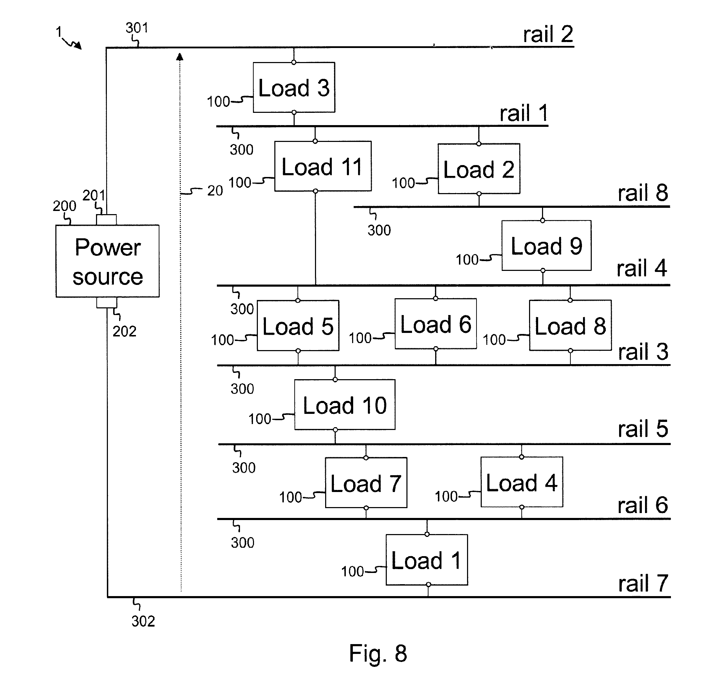

Fig. 8 shows the system 1 of Fig. 7, at an instant t₂ consecutive to, i.e. later than, the instant t₁. The system 1 at an instant t₂ comprises a power source 200, 11 loads 100 labelled load 1 to 11, a first voltage rail 301 labelled rail 2, a second voltage rail 302 labelled rail 7, and a plurality of voltage rails 300 labelled rail 3 to rail 6 and rail 1 and rail 8. Components having identical reference numbers to components in Fig. 6 perform the same function. The power source 200 comprises a first terminal 201 and a second terminal 202, and delivers a main voltage 20. The load 100 labelled load 3 is coupled to the voltage rails 301 labelled rail 2 and 300 labelled rail 1. The load 100 labelled load 11 is coupled to the voltage rails 300 labelled rail 1 and 300 labelled rail 4. The load 100 labelled load 2 is coupled to the voltage rails 300 labelled rail 1 and 300 labelled rail 8. The load 100 labelled load 9 is coupled to the voltage rails 300 labelled rail 8 and 300 labelled rail 4. The loads 100 labelled load 5, 6 and 8 are coupled to the voltage rails 300 labelled rail 4 and 3. The load 100 labelled load 10 is coupled to the voltage rails 300 labelled rails 3 and 5. The loads 100 labelled load 7 and load 4 are coupled to the voltage rails 300 labelled rail 5 and 300 labelled rail 6. The load 100 labelled load 1 is coupled to the voltage rails 300 labelled rail 6 and 302 labelled rail 7. The loads 100 labelled load 5 and load 6 and load 8 are coupled to the same voltage rails 300 labelled rail 4 and 300 labelled rail 3. The supply voltages 10 for the loads 100 labelled load 5 and load 6 and load 8 are substantially identical. The loads 100 labelled load 4 and load 7 are coupled to the same voltage rails 300 labelled rail 5 and 300 labelled rail 6. The supply voltages 10 for the loads 100 labelled load 4 and load 7 are substantially identical. According to an alternative embodiment, one or more of the supply voltages for the loads 100 are substantially different. According to a further alternative embodiment, the system 1 comprises a plurality of loads 100, such as for example tens, hundreds, thousands of loads, etc, and a plurality of voltage rails 300, such as for example tens, hundreds, thousands of rails, etc. According to an alternative embodiment, the system 1 comprises one or more series regulators 600 similar to the series regulator from Fig. 5, placed in series with loads 100. For example, system 1 of Fig. 7 comprises a series regulator 600 placed in series with load 2 and load 9 in case load 11 requires a higher supply voltage 10 than the sum of desired supply voltages across load 2 and load 9. By applying Kirchhoffs current law, a control element of the system 1 ensures that, for each topology of coupling of the loads 100 over time, loads 100 which can operate at the same voltage can be connected in parallel to each other, and that loads 100 which draw nearly the same current can be connected in series to each other.

It is clear that the topology resulting from the voltage converting method is scalable. For example, an FPGA using the voltage converting method may be divided into 4, maybe even 64 or even 256 quadrants, labelled a, b, c, d, etc. All the loads within a quadrant can connect to local voltage rails. For example, the voltage rails 301a, 302a, 300a for the first quadrant; 301b, 302b, 300b for the second quadrant; 301c, 302c, 300c for the third quadrant, etc. The first voltage rails 301a, 301 b, 301 c and the second voltage rails 302a, 302b, 302c act as supply terminals of the quadrant loads at the higher level in the hierarchy. Such scaling is useful to limit the number of switches and to limit the physical area in which voltage rails 300, labelled 300a, 300b, 300c, are distributed. Each quadrant may have its own control element 500a, 500b, 500c. According to an alternative embodiment, there may be one control element 500 for all the quadrants.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A voltage converting system (1) for supplying a plurality of supply voltages (10), said voltage converting system (1) comprising:
- a power source (200), adapted to deliver a main voltage (20) and comprising two terminals;
- a first voltage rail (301) connected to a first terminal (201) of said power source (200);
- a second voltage rail (302) connected to a second terminal (202) of said power source (200);
- one or more voltage rails (300), positioned between said first voltage rail (301) and said second voltage rail (302), and adapted to split said main voltage (20) to said plurality of supply voltages (10) and to supply said plurality of supply voltages (10);
- a load (100), coupled to said voltage rails (300, 301, 302) and adapted to receive a desired voltage;
- a voltage measuring unit (400), adapted to measure a supply voltage (10) and to generate information (2) indicative for said supply voltage measured (10);
- a control element (500), adapted to:
- receive from said voltage measuring unit (400) said information (2); and
- generate instructions (3) to modify the topology of the coupling of said load (100) to said voltage rails (300, 301, 302) when said supply voltage measured (10) is not substantially equal to said desired voltage.

2. A voltage converting system (1) according to claim 1, wherein said load (100) further comprises:
- a first load switch (101) adapted to connect said load (100) to a primary load voltage rail (303);
- a second load switch (103) adapted to connect said load (100) to a secondary load voltage rail (304); and
wherein said load (100) is further adapted to:
- receive from said control element (500) said instructions (3); and
- switch said first load switch (101) and/or said second load switch (102) to modify the topology of the coupling of said load (100) to said voltage rails (300, 301, 302, 303, 304) according to said instructions (3).

3. A voltage converting system (1) according to claim 1, wherein said power source (200) further comprises:
- a first source switch (203) to connect said first terminal (201) to said first voltage rail (301);
- a second source switch (204) to connect said second terminal (202) to said second voltage rail (302); and
wherein said power source (200) is further adapted to:
- receive from said control element (500) said instructions (3); and
- switch said first source switch (203) and/or said second source switch (204) to modify the topology of the coupling of said first terminal (201) and/or said second terminal (202) to said voltage rails (300, 301, 302) according to said instructions (3).

4. A voltage converting system (1) according to claim 1, wherein said load (100) comprises said voltage measuring unit (400).

5. A voltage converting system (1) according to claim 1, wherein said voltage converting system (1) further comprises:
- a plurality of loads (100) similar to said load (100), each load being adapted to receive a respective desired voltage;
- a plurality of voltage measuring units (400) similar to said voltage measuring unit (400), each voltage measuring unit (400) adapted to measure a supply voltage (10) and to generate information (2) indicative for said supply voltage measured (10);
and wherein said control element (500) is further adapted to:
- receive from said plurality of voltage measuring units (10) said information (2); and
- generate instructions (3) to modify the topology of the coupling of one or more of said plurality of loads (100) to said voltage rails (300, 301, 302) when said supply voltage measured (10) for one or more of said plurality of loads (100) is not substantially equal to said respective desired voltage.

6. A voltage converting system (1) according to claim 5, wherein said control element (500) is further adapted to measure said main voltage (20).

7. A voltage converting system (1) according to claim 5, wherein each load (100) comprises a communication module (700) adapted to:
- transmit data (4) to one or more loads (100) of said plurality of loads (100); and
- receive data (4) from one or more loads (100) of said plurality of loads (100).

8. A voltage converting system (1) according to claim 1, wherein said voltage converting system (1) further comprises a plurality of series regulators (600) coupled to said voltage rails (300, 301, 302).

9. A voltage converting system (1) according to claim 1, wherein:
- said load (100) is further adapted to draw a desired current;
- said voltage converting system (1) further comprises a dummy load (800), adapted to receive a supply voltage (10) and coupled to said voltage rails (300, 301, 302) to which said load (100) is coupled;
- said voltage measuring unit (400) is further adapted to measure a current (40) drawn by said load (100) and/or to generate information (6) indicative for said current (40);
- said control element (500) is further adapted to:
- receive information (6) indicative for said current (40); and
- generate instructions (3) according to said current (40) to modify the topology of the coupling of said load (100) to said voltage rails (300) when said supply voltage measured (10) is not substantially equal to said desired voltage; and
- generate instructions (5) according to said current (40) to modify said current (40) drawn by the load (100) when said current (40) measured is not substantially equal to said desired current.

10. A voltage converting system (1) according to claim 9, wherein said control element (500) is further adapted to calculate a product of said supply voltage measured (10) and said current (40) for said load (100).

11. A voltage converting system (1) according to claim 6, wherein:
- each load (100) is further adapted to draw a desired current;
- said voltage converting system (1) further comprises a plurality of dummy loads (800), each dummy load (800) adapted to receive a supply voltage (10) and coupled to said voltage rails (300, 301, 302) to which said corresponding load (100) is coupled;
- each voltage measuring unit (400) is further adapted to measure a current (40) drawn by said respective load (100) and/or to generate information (6) indicative for said current (40);
- said control element (500) is further adapted to:
- receive said information (6) indicative for said current (40) drawn by each of said loads (100) from said plurality of voltage measuring units (400); and
- generate instructions (3) according to said current (40) to modify the topology of the coupling of one or more of said plurality of loads (100) to said voltage rails (300, 301, 302) when said supply voltage measured (10) for one or more of said plurality of loads (100) is not substantially equal to said respective desired voltage; and
- generate instructions (5) according to said current (40) to modify said current (40) when said current (40) drawn by one or more corresponding load (40) of said plurality of loads (100) is not substantially equal to said desired current.

12. A voltage converting system (1) according to claim 11, wherein said control element (500) is further adapted to:
- calculate a product of said supply voltage measured (10) and said current (40) for each of said plurality of loads (100); and
- calculate a sum of said products (4) for said plurality of loads (100).

13. A load (100) comprising:
- a first load switch (101) adapted to connect said load (100) to a primary load voltage rail (303);
- a second load switch (102) adapted to connect said load (100) to a secondary load voltage rail (304); and
- a voltage measuring unit (400) configured to:
- measure a supply voltage (10);
- generate information (2) indicative for said supply voltage measured (10); and
- provide said information (2) to a control element (500);
and wherein said load (100) is adapted to:
- receive from said control element (500) instructions (3) to modify the topology of the coupling of said load (100) to said voltage rails (300, 301, 302) when said supply voltage measured (10) is not substantially equal to said desired voltage; and
- switch said first load switch (101) and/or said second load switch (102) to modify the topology of the coupling of said load (100) to said voltage rails (300, 303, 304) according to said instructions (3).

14. A power supply (200) adapted to deliver a main voltage (20) and comprising:
- a first terminal (201) and a second terminal (202);
- a first source switch (203) to connect said first terminal (201) to a first voltage rail (301);
- a second source switch (204) to connect said second terminal (202) to a second voltage rail (302); and
wherein said power source (200) is further adapted to:
- receive from a control element (500) instructions (3) to modify the topology of the coupling of a load (100) to voltage rails (300, 301, 302) comprising said first voltage rail (301) and said second voltage rail (302) when a supply voltage measured (10) is not substantially equal to a desired voltage; and
- switch said first source switch (203) and/or said second source switch (204) to modify the topology of the coupling of said first terminal (201) and/or said second terminal (202) to said voltage rails (300, 301, 302) according to said instructions (3).

15. A method for supplying a plurality of supply voltages (10), said method comprising the steps of:
- connecting a first voltage rail (301) and a second voltage rail (302) respectively to a first terminal (201) and a second terminal (202) of a power source (200);
- providing one or more voltage rails (300) between said first voltage rail (301) and said second voltage rail (302);
- coupling a load (100) between two of said one or more voltage rails (300, 301, 302);
- measuring a supply voltage (10);
- generating information (2) indicative for said supply voltage measured (10); and
- generating instructions (3) to modify the topology of the coupling of said load (100) to said voltage rails (300, 301, 302) when said supply voltage measured (10) is not substantially equal to a desired voltage.
